Europäisches Patentamt

European Patent Office

Office européen des brevets

(19)

(11) Numéro de publication: **0 216 693**
**B1**

## (12) FASCICULE DE BREVET EUROPEEN

(45) Date de publication du fascicule du brevet:
**11.01.89**

(21) Numéro de dépôt: **86401985.6**

(22) Date de dépôt: **10.09.86**

(51) Int. Cl.⁴: **F24C 3/08**, F24C 3/12,
F16L 37/08

(54) **Dispositif d'alimentation en gaz des brûleurs d'un appareil de cuisson.**

(30) Priorité: **13.09.85 FR 8513632**

(43) Date de publication de la demande:
**01.04.87 Bulletin 87/14**

(45) Mention de la délivrance du brevet:
**11.01.89 Bulletin 89/2**

(84) Etats contractants désignés:
**BE DE FR GB IT LU NL**

(56) Documents cités:
**DE-B- 1 206 233**
**FR-A- 1 191 284**
**FR-A- 1 370 606**

(73) Titulaire: **COMPAGNIE EUROPEENNE POUR L'EQUIPEMENT MENAGER "CEPEM", 74, rue du Surmelin, F-75020 Paris(FR)**

(72) Inventeur: **Gernez, Alain THOMSON-CSF, SCPI 19, avenue de Messine, F-75008 Paris(FR)**

(74) Mandataire: **Grynwald, Albert et al, THOMSON-CSF SCPI 19, avenue de Messine, F-75008 Paris(FR)**

ACTORUM AG

## Description

L'invention concerne un dispositif pour l'alimentation en gaz des brûleurs d'un appareil de cuisson.

Les appareils de cuisson à gaz tels que les cuisinières, les tables de cuisson, les réchauds, comportent des brûleurs dont l'alimentation en gaz est commandée par des robinets de coupure et de réglage le plus souvent placés en partie haute de l'appareil.

Les robinets sont montés en parallèle sur une tubulure d'alimentation générale qui est reliée à la réserve de gaz, éventuellement par l'intermédiaire d'une tuyauterie souple complémentaire. La sortie de chaque robinet est raccordée à un brûleur par l'intermédiaire d'un tube métallique. Plus précisément, c'est au dispositif porte-injecteur du brûleur qu'est raccordé ce tube métallique, après que le robinet et le porte injecteur correspondants aient été mis en place.

Les solutions connues de raccordement des tubes aux dispositifs porte-injecteurs et aux robinets présentent des inconvénients. En effet, les tubes de raccord sont terminés à chacune de leurs extrémités par des collets qui sont pressés contre les sorties des robinets et les entrées des porte-injecteurs par des dispositifs filetés de type écrou ou vis creuse. Il faut donc prévoir des filetages sur les robinets et sur les porte-injecteurs. Ensuite, le serrage dans les ateliers est long et nécessite l'emploi d'outils spéciaux; enfin, les tubes ont généralement des formes compliquées qui font apparaître des difficultés de mise en place et imposent un montage manuel des tubes. Egalement, il peut arriver que lors de la mise en place, les tubes et/ou les filetages soient faussés suite à une mauvaise manipulation. Dans ce cas, l'étanchéïté qui doit exister au niveau des raccords risque de ne plus être assurée.

La présente invention a pour but de remédier à ces inconvénients, en réduisant le temps et les difficultés de mise en place des tubes de liaison entre les robinets et les porte-injecteurs, et en permettant une éventuelle automatisation de la mise en place.

Selon l'invention, un dispositif d'alimentation en gaz des brûleurs d'un appareil de cuisson, comprenant, associé à chaque brûleur, un robinet de coupure et de réglage du débit gazeux, un injecteur, et un tube de raccord dont une extrémité communique avec un orifice de sortie du robinet et l'autre avec un orifice d'entrée de l'injecteur, lesdits orifices ayant des axes parallèles entre eux et étant orientés dans le même sens, de même que les extrémités du tube, la distance entre les axes des orifices étant égale à la distance entre les axes des extrémités du tube, est caractérisé en ce que la forme des orifices est complémentaire de celle des extrémités afin que la liaison entre les extrémités du tube et lesdits orifices puisse être effectuée par insertion de deux de ces éléments dans les deux autres, et en ce que ladite forme permet la mise en place d'au moins un joint d'étanchéïté entre chaque extrémité du tube et l'orifice correspondant du robinet et de l'injecteur, et en ce que des moyens de blocage sont prévus à chaque extrémité du tube pour le maintenir et empêcher son retrait.

Selon une autre caractéristique de l'invention, la forme des extrémités du tube et celle des orifices du robinet et de l'injecteur sont telles que ce sont les extrémités du tube qui sont insérées dans les orifices.

Selon une autre caractéristique, chaque extrémité du tube est associée à une pièce élastique qui permet un clipsage sur le robinet et sur l'injecteur, afin d'empêcher le retrait du tube.

Ainsi, l'invention permet un gain de temps au montage du tube et permet d'envisager une automatisation de cette phase de montage. En effet, le montage consiste à mettre en regard les extrémités du tube avec les orifices du robinet et du porte-injecteur, puis à insérer soit les extrémités du tube dans les orifices, soit des éléments du robinet et du porte-injecteur sur lesquels débouchent les orifices dans les extrémités du tube, par un simple mouvement de translation le long des axes des orifices et des extrémités.

Ensuite, il suffit de réaliser le blocage du tube sur les éléments où débouchent les orifices du robinet et du porte-injecteur.

D'autres caractéristiques et avantages de l'invention apparaîtront avec la description de quelques modes de réalisation faite en regard des figures annexées sur lesquelles:

– la figure 1 est une vue éclatée d'une table de cuisson comportant un dispositif conforme à l'invention;

– la figure 2 est une vue éclatée d'une table de cuisson lors de la mise en place du dispositif;

– la figure 3 est une vue éclatée d'une table de cuisson après que le dispositif ait été mis en place;

– la figure 4 est une vue éclatée en coupe partielle d'un mode de réalisation des éléments de raccord entre le tube et un orifice ;

– la figure 5 est une vue en coupe partielle lorsque les éléments de la figure 4 sont raccordés.

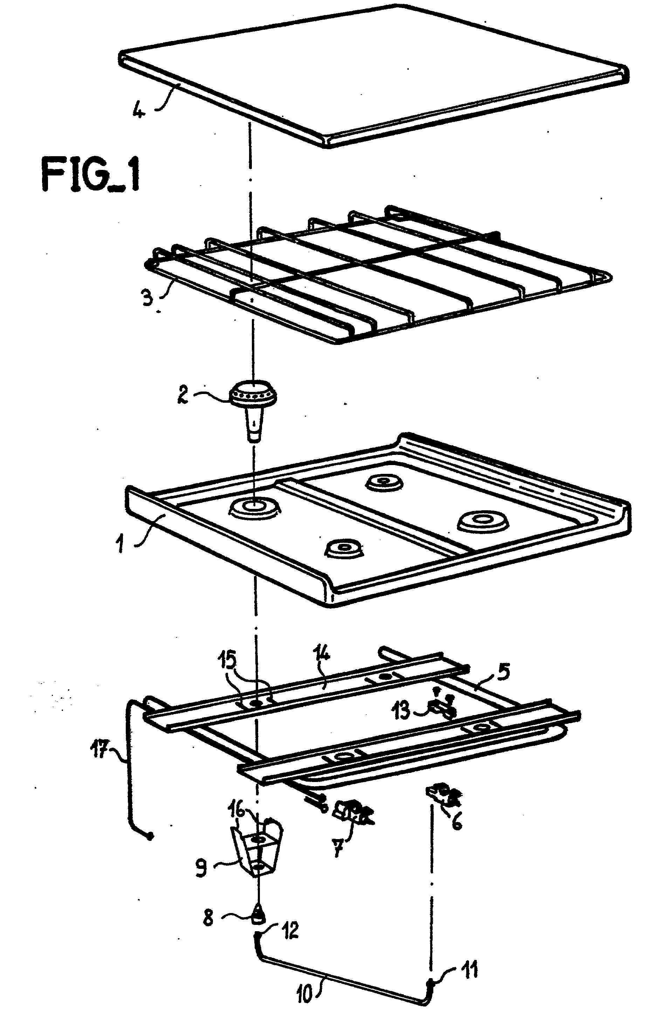

Sur la figure 1, on a représenté une vue éclatée du dessus d'une table de cuisson de cuisinière comportant au moins une plaque support 1 au-dessus de laquelle sont disposés au moins un brûleur 2 à gaz, une grille 3 de support des récipients et un couvercle 4.

L'arrivée du gaz à la plaque de cuisson se fait grâce à une tubulure 5 d'alimentation générale sur laquelle doivent être fixés les robinets 6, 7 d'alimentation des brûleurs de la cuisinière. Un injecteur 8 est prévu à l'entrée de chaque brûleur 2, ainsi qu'un porte-injecteur 9 pour maintenir l'injecteur 8 en place sur le chassis de l'appareil.

Le raccord entre le robinet et l'injecteur se fait grâce à un tube de raccord 10, dont les ouvertures d'extrémité 11, 12 sont parallèles entre elles et débouchent dans le même sens.

Le robinet 6 possède un orifice de sortie du gaz, non visible sur la figure, car il débouche perpendiculairement, au plan général de la table de cuisson, dans l'exemple représenté. Il en est de même de l'injecteur 8 qui possède un orifice d'entrée de gaz parallèle à l'orifice de sortie du robinet 6.

Le robinet 6, le porte-injecteur 9 et/ou l'injecteur 8 sont réalisés de façon que lesdits orifices puissent coopérer avec les extrémités 11, 12 du tube 10 de raccord, afin que le raccord puisse se faire par une simple insertion, par exemple, des extrémités 11, 12 du tube 10 de raccord dans les orifices de sortie du robinet et d'entrée de l'injecteur 8 et/ou du porte-injecteur 9.

Dans une variante, on prévoit que ce soient des formes particulières entourant les orifices du robinet et de l'injecteur 8 et/ou du porte-injecteur 9 qui puissent être insérées dans les extrémités du tube 10 de raccord.

Le maintien du robinet 6 sur la tubulure 5 d'alimentation générale est assuré de façon connue à l'aide d'un collier ou d'une bague 13 de serrage.

Une barrette-support 14 est prévue dans la carcasse pour assurer le maintien du porte-injecteur 9. Des fentes 15 sont prévues à cet effet sur la barrette pour coopérer avec des lamelles 16 du porte-injecteur.

Il est bien entendu que la fixation du porte-injecteur 9 sur la barrette 14 peut être assuré par d'autres moyens tels que, par exemple, des vis, des soudures.

Sur cette figure, on a également représenté un second tube de raccord 17 pour alimenter par exemple le brûleur d'un four situé sous la table de cuisson, à partir d'un robinet 7. Les extrémités de ce tube sont également parallèles entre elles de façon à pouvoir être mises en position sur le robinet 7 et sur le brûleur du four, non représenté, par un simple mouvement de translation. Par contre, dans ce cas d'alimentation des brûleurs du four, les axes des orifices sont de préférence parallèles au plan de la table de cuisson, comme le montre la figure.

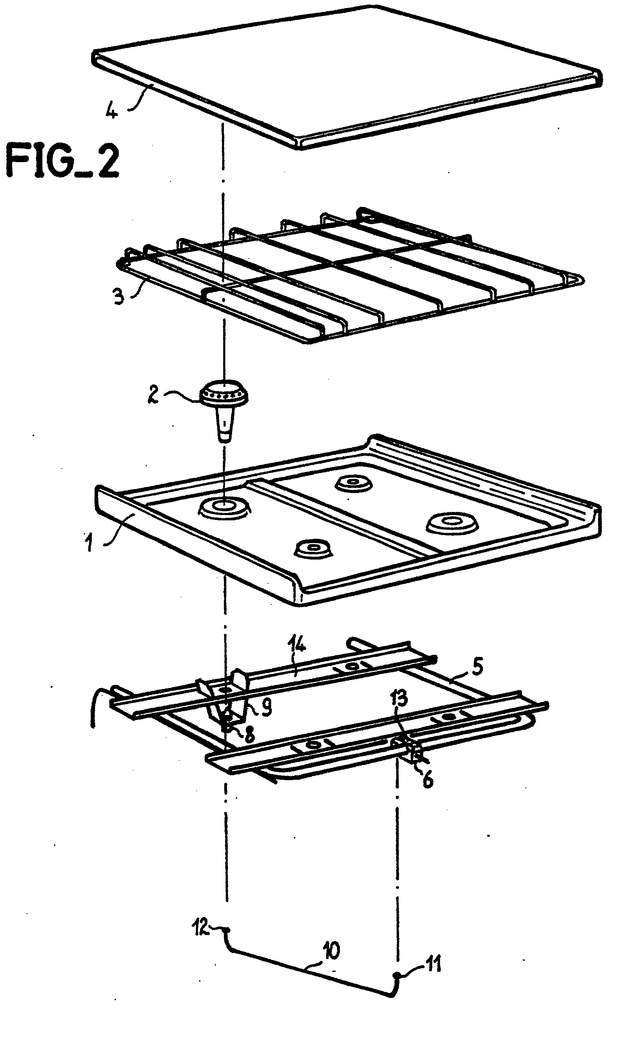

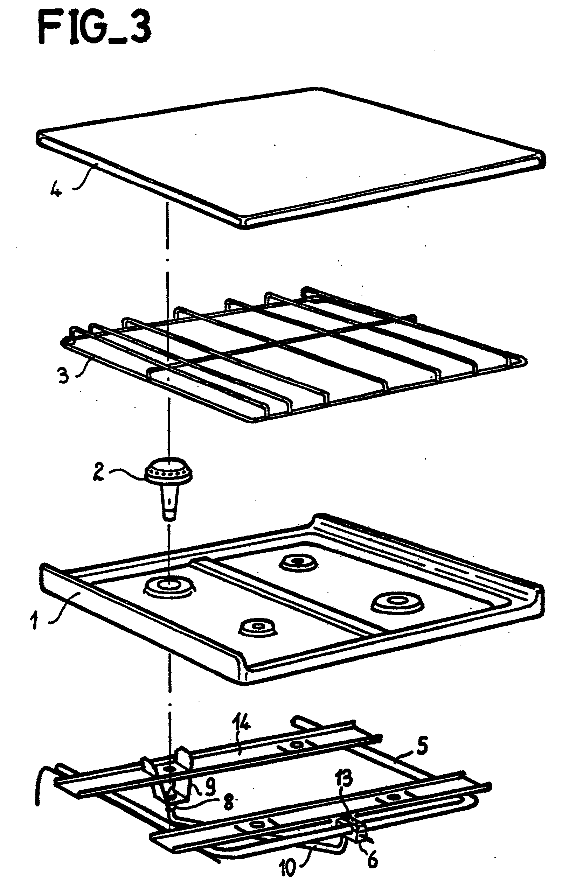

Les figures 2 et 3 permettent de voir les différentes phases du montage du dispositif de raccordement selon l'invention.

Sur la figure 2, le robinet 6 d'alimentation du brûleur 2 est en place, ainsi que l'injecteur 8 et le porte-injecteur 9 correspondants.

Dans l'exemple représenté, les axes des orifices de sortie du gaz du robinet 6 et d'entrée dans l'injecteur 8 sont perpendiculaires au plan de la table de cuisson et débouchent vers le bas.

La fixation du robinet est assurée de façon connue à l'aide d'une bague 13 de serrage. Le porte-injecteur 9 est fixé sur une barrette support 14, elle-même fixée, par exemple à la tubulure 5 d'alimentation générale.

La mise en place du tube 10 de raccord entre le robinet 6 et l'injecteur 8 est dès lors extrêmement aisée, puisqu'il suffit de mettre les extrémités 11, 12 du tube 10 en regard des orifices de sortie du robinet 6 et d'entrée de l'injecteur 8 ou du porte-injecteur 9, puis d'effectuer un mouvement de translation du tube 10 vers le robinet et le porte-injecteur.

La figure 3 représente l'ensemble après que le tube 10 de raccord ait été mis en place à son tour.

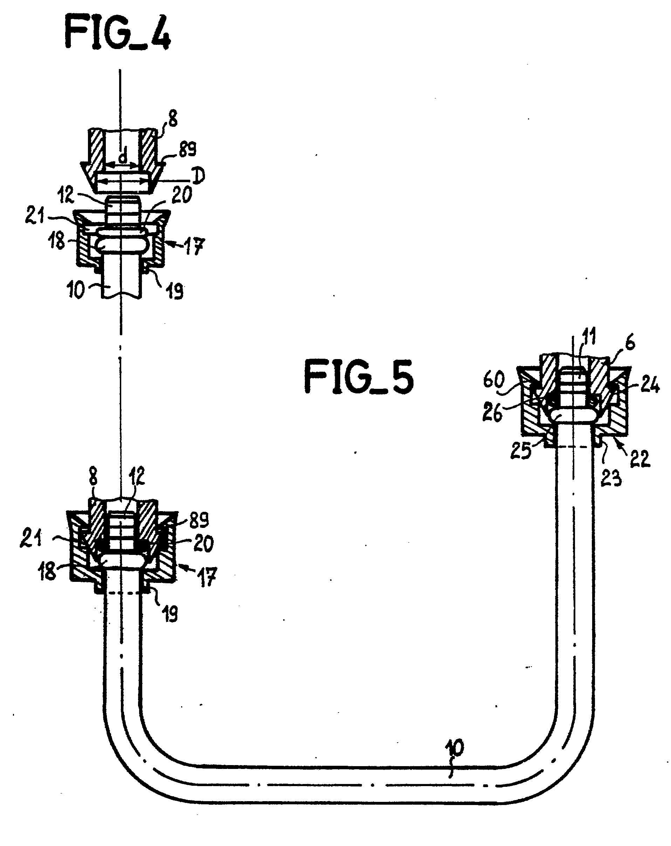

La figure 4 montre un mode préféré de réalisation des moyens pour assurer la fixation et l'étanchéité entre le tube 10 de raccord et un robinet ou un injecteur ou un porte-injecteur.

L'extrémité 12 du tube 10 est destinée à être engagée par emboîtement dans l'orifice de sortie du robinet 10 ou d'entrée de l'injecteur 8 ou du porte-injecteur.

De manière générale, la forme de l'orifice est complémentaire de celle de l'extrémité du tube pour permettre cet emboîtement.

De préférence, les extrémités 12 du tube 10 ont une forme cylindrique. Il s'ensuit que l'orifice d'entrée de l'injecteur 8 ou du porte-injecteur et que l'orifice de sortie du robinet doivent également posséder une forme cylindrique, le diamètre extérieur de l'extrémité 12 du tube 10 étant inférieur au diamètre intérieur de l'orifice de l'injecteur 8 ou du robinet 6.

Le maintien en place du tube 10 est assuré à l'aide d'une pièce complémentaire 17 qui se bloque par clipsage sur des reliefs 89 ménagés dans la masse de l'élément de réception 8, 6 (robinet ou injecteur).

La pièce complémentaire 17 possède la forme générale d'une bague, de diamètre légèrement supérieur à celui du tube. Cette bague est engagée à l'extrémité du tube et y est maintenue grâce à un collet 18 ménagé sur le tube 10 qui coopère avec un étranglement 19 de la bague. Afin de permettre ce maintien, le collet 18 se trouve donc entre l'extrémité 12 du tube 10 et l'étranglement 19.

Un joint 20, de préférence torique est placé entre le collet 18 et l'extrémité 12 du tube, afin d'assurer l'étanchéité après la mise en place.

La structure délimitant l'orifice dans lequel doit être engagée l'extrémité du tube possède une forme destinée à coopérer avec la bague.

Dans un mode de réalisation préféré, la bague est élastique et possède, par exemple, des éléments en forme de crochets 21 destinés à coopérer par clipsage avec des éléments complémentaires 89, situés à la périphérie de l'orifice, lorsque le tube 10 est en place.

Sur la figure 5, on a représenté le tube, la partie de l'injecteur 8 ou du porte-injecteur et la partie du robinet 6 comportant les orifices de réception des extrémités 11, 12, et les pièces complémentaires 17, 22 de maintien en place.

Côté injecteur 8 ou porte-injecteur, se trouve la pièce 17 de maintien précédemment décrite.

Les éléments en forme de crochets 21 sont clipsés sur les formes 89 complémentaires de la structure entourant l'orifice.

Côté robinet 6, on trouve une pièce 22 identique à la pièce 17, c'est-à-dire possédant un étranglement 23, des parties en forme de crochet 24, pour coopérer avec des parties complémentaires 60 de la structure autour de l'orifice du robinet.

Un collet 25 est réalisé sur le tube, et un joint 26 est intercalé entre le bord de l'orifice et le collet.

De préférence, la structure délimite les orifices est identique sur les robinets et sur les porte-injecteurs ou injecteurs, de même que la forme des orifices.

Dans le mode de réalisation représenté sur les figures 4 et 5 les entrées de chacun des orifices sont cylindriques et possèdent un diamètre intérieur D supérieur au diamètre extérieur des extrémités 11, 12 du tube 10 et des collets 18; 25, mais légèrement inférieur au diamètre extérieur des joints 20, 26 utilisés lorsque ces derniers sont en place de façon que les extrémités du tube, les joints et les collets puissent pénétrer dans les entrées desdits orifices et que les joints se trouvent alors pressés entre la paroi extérieure des extrémités du tube et la paroi intérieure de l'entrée des orifices afin d'assurer l'étanchéïté.

Afin d'éviter qu'une trop grande longueur de tube soit introduite dans les orifices, le diamètre intérieur de l'entrée de ces derniers se resserre brusquement à une distance de l'entrée telle qu'au moins le joint y soit totalement introduit. De préférence, pour celà le diamètre intérieur D est réduit et est ramené à un diamètre d tel que seules les parties du tube 10 comprises entre les extrémités du tube et les joints puissent passer. Ce resserrement se situe donc à une distance de l'entrée supérieure à l'épaisseur des joints prise entre les collets et les extrémités du tube. Le diamètre d devient donc au moins légèrement supérieur au diamètre extérieur des extrémités du tube 10.

Ce changement de diamètre est réalisé en forme de décrochements, sur lesquels les joints viennent en butée.

La mise en place d'un tube s'effectue de la façon suivante :

Les joints 20, 26 sont mis en place à chaque extrémité, puis les extrémités 11, 12 du tube sont mises en regard des orifices dans lesquels elles doivent être engagées puis, y sont engagées par un mouvement de translation.

Lorsque les joints viennent en butée contre les décrochements des orifices, les pièces supplémentaires 17, 22 de blocage sont alors clipsées grâce aux éléments en forme de crochets 21, 24 qui viennent coopérer avec les détails de forme complémentaire 89, 60 des structures entourant les orifices.

Les joints se trouvent alors serrés entre la paroi extérieure de chaque extrémité 11, 12 du tube et la paroi intérieure de chaque orifice. L'étanchéïté est assurée.

Dans un mode de réalisation, les bagues 17, 22 sont réalisées de façon que, lorsque le clipsage est assuré, une pression complémentaire soit assurée sur les collets 18, 25 de façon que les joints 20, 26 soit serrés entre les collets 18, 15 et les décrochements des orifices. Cette réalisation contribue à assurer l'étanchéïté.

## Revendications

1. Dispositif d'alimentation en gaz des brûleurs d'un appareil de cuisson, comprenant, associé à chaque brûleur, un robinet de coupure et de réglage du débit gazeux comportant un orifice de sortie du gaz, un injecteur (8) comportant un orifice d'entrée du gaz, et un tube (10) de raccord entre ces deux orifices, lesdits orifices ayant des axes parallèles entre eux et débouchant dans le même sens, les deux extrémités (11, 12) du tube (10) ayant leurs axes parallèles entre eux et débouchant dans le même sens, et la distance entre les axes des orifices étant égale à la distance entre les axes des extrémités (11, 12) du tube, caractérisé en ce que la forme des orifices est complémentaire de celle des extrémités, afin que la liaison entre les extrémités du tube et lesdits orifices soit effectuée uniquement par insertion de deux de ces éléments dans les deux autres, et en ce que ladite forme permet la mise en place et le maintien d'au moins un joint d'étanchéïté (20, 26) entre chaque extrémité du tube et l'orifice correspondant, et en ce que des moyens (17, 22) de blocage sont prévus à chaque extrémité du tube pour le maintenir et empêcher son retrait.

2. Dispositif selon la revendication 1, caractérisé en ce que les extrémités (11, 12) du tube (10) sont de section circulaire, de même que les orifices du robinet (6) et de l'injecteur (8), et en ce que le diamètre extérieur desdites extrémités est inférieur au diamètre intérieur des orifices, de façon que lesdites extrémités (11, 12) du tube puissent être insérées dans lesdits orifices.

3. Dispositif selon la revendication 2, caractérisé en ce que les moyens de blocage (17, 22) du tube (10) sur le robinet (6) et sur l'injecteur (8) sont constitués par des bagues possédant chacune une partie élastique comportant au moins un détail (21, 24) pouvant coopérer par clipsage avec un détail de forme complémentaire (89, 60) de la structure entourant chaque orifice.

4. Dispositif selon la revendication 3, caractérisé en ce que des moyens (19, 23) sont prévus pour maintenir les bagues (17, 22) en place sur le tube (10).

5. Dispositif selon la revendication 4, caractérisé en ce que les moyens pour maintenir les bagues (17, 22) sont constitués par des étranglements (19, 23) ménagés sur les bagues, et par des collets (18, 25) ménagés sur le tube (10) à proximité de chacune de ses extrémités (11, 12), lesdits collets faisant office de butées pour lesdits étranglements.

6. Dispositif selon la revendication 5, caractérisé en ce qu'au moins un joint d'étanchéïté (20, 26) est intercalé entre chaque collet (18, 25) et l'extrémité (11, 12) correspondante du tube (10).

7. Dispositif selon la revendication 6, caractérisé en ce que le diamètre intérieur (D) à l'entrée des orifices des robinets (6) ou des injecteurs (8) est supérieur au diamètre extérieur des collets (18, 25) et légèrement inférieur au diamètre extérieur des joints (20, 26) lorsque ces derniers sont en place entre les collets et les extrémités du tube, afin de permettre l'insertion des joints et des collets dans les entrées desdits orifices, et le pressage des joints entre les parois intérieures des entrées et les parois extérieures des extrémités du tube, pour assurer l'étanchéïté.

8. Dispositif selon la revendication 7, caractérisé en ce qu'à une distance de l'entrée des orifices supérieure à l'épaisseur des joints prise entre les collets et les extrémités du tube, les orifices se resserrent en décrochement, et en ce que leur diamètre intérieur (d) devient légèrement supérieur au diamètre extérieur des parties du tube comprises entre les extrémités (11, 12) et les joints (20, 26) de façon que seules ces parties puissent y être insérées.

9. Dispositif selon la revendication 8, caractérisé en ce que chaque joint (20, 26) est pressé entre un collet (18, 25) et le décrochement de l'orifice correspondant du robinet (6) ou de l'injecteur (8), lorsque le tube (10) est en place et lorsque le détail (21, 24) de la partie élastique des bagues (17, 22) est clipsé sur le détail de forme complémentaire (89, 60) de la structure entourant ledit orifice correspondant.

10. Dispositif selon l'une quelconque des revendications précédentes, caractérisé en ce que le joint (20, 26) est un joint torique.

**Patentansprüche**

1. Gaszufuhrvorrichtung zu den Brennern eines Kochherdes, die in Zuordnung zu jedem Brenner ein Absperr- und Regelventil für die Gasmenge, das eine Gasauslaßöffnung besitzt, einen Injektionskopf (8), der eine Gaseinlaßöffnung besitzt, und ein Verbindungsrohr (10) zwischen diesen beiden Öffnungen aufweist, wobei die Öffnungen ebenso wie die beiden Enden (11, 12) des Rohrs (10) zueinander parallele Achsen besitzen und mit ihren Mündungen in dieselbe Richtung weisen und der Abstand zwischen den Achsen der Öffnungen gleich dem zwischen den Achsen der Enden (11, 12) des Rohrs ist, dadurch gekennzeichnet, daß die Form der Öffnungen komplementär zu der der Enden ist, so daß die Verbindung zwischen den Enden des Rohrs und den Öffnungen nur durch Einsetzen von zwei dieser Elemente in die beiden anderen erfolgt, und daß diese Form das Einsetzen und die Fixierung mindestens einer Dichtung (20, 26) zwischen jedem Ende des Rohrs und der entsprechenden Öffnung erlaubt, und daß Mittel (17, 22) zur Blockierung an jedem Ende des Rohrs vorgesehen sind, um es zu halten und seine Entfernung zu verhindern.

2. Vorrichtung nach Anspruch 1, dadurch gekennzeichnet, daß die Enden (11, 12) des Rohrs (10) ebenso wie die Öffnungen des Ventils (6) und des Injektionskopfes (8) kreisförmigen Querschnitt besitzen, und daß der Außendurchmesser dieser Enden kleiner als der Innendurchmesser der Öffnungen ist, so daß die Enden (11, 12) des Rohrs in die Öffnungen eingesetzt werden können.

3. Vorrichtung nach Anspruch 2, dadurch gekennzeichnet, daß die Mittel (17, 22) zur Blockierung des Rohrs (10) auf dem Ventil (6) und dem Injektionskopf (8) aus Ringen bestehen, die je einen elastischen Bereich besitzen mit mindestens einer Partie (21, 24), die durch Schnappverschluß mit einer Partie einer komplementären Form (89, 60) der Struktur zusammenwirken kann, die jede Öffnung umgibt.

4. Vorrichtung nach Anspruch 3, dadurch gekennzeichnet, daß Mittel (19, 23) zur Fixierung der Ringe (17, 22) auf dem Rohr (10) vorgesehen sind.

5. Vorrichtung nach Anspruch 4, dadurch gekennzeichnet, daß die Mittel zum Fixieren der Ringe (17, 22) nach Verengungen (19, 23) auf den Ringen und von Kragen (18, 25) auf dem Rohr (10) in der Nähe jedes seiner Enden (11, 12) gebildet werden, wobei diese Kragen als Anschlag für die Verengungen dienen.

6. Vorrichtung nach Anspruch 5, dadurch gekennzeichnet, daß mindestens eine Dichtung (20, 26) zwischen jedem Kragen (18, 25) und dem entsprechenden Ende (11, 12) des Rohrs (10) eingefügt ist.

7. Vorrichtung nach Anspruch 6, dadurch gekennzeichnet, daß der Innendurchmesser (D) am Eingang der Öffnungen in die Ventile (6) oder Injektionsköpfe (8) größer als der Außendurchmesser der Kragen (18, 25) und geringfügig kleiner als der Außendurchmesser der Dichtungen (20, 26) ist, wenn diese Dichtungen zwischen die Kragen und die Enden des Rohrs eingefügt sind, um die Einfügung der Dichtungen und der Kragen in die Eingänge der Öffnungen und die Kompression der Dichtungen zwischen den inneren Wänden der Eingänge und den äußeren Wänden der Enden des Rohrs zu erlauben und die Dichtheit zu bewirken.

8. Vorrichtung nach Anspruch 7, dadurch gekennzeichnet, daß in einem Abstand vom Eingang der oberen Öffnungen entsprechend der Dicke der Dichtungen zwischen den Kragen und den Enden des Rohrs die Öffnungen sich plötzlich einschnüren, und daß ihr Innendurchmesser (d) geringfügig größer als der Außendurchmesser der Teile des Rohrs wird, die zwischen den Enden (11, 12) und den Dichtungen (20, 26) liegen, so daß nur diese Teile dort eingesetzt werden können.

9. Vorrichtung nach Anspruch 8, dadurch gekennzeichnet, daß jede Dichtung (20, 26) zwischen einem Kragen (18, 25) und der plötzlichen Einschnürung der entsprechenden Öffnung des Ventils (6) oder Injektionskopfes (8) komprimiert wird, wenn das Rohr (10) an seinem Platz ist und wenn der elastische Bereich (21, 24) der Ringe (17, 22) auf den Bereich komplementärer Form (89, 60) der die entsprechende Öffnung umgebenden Struktur durch Schnappverbindung aufgebracht ist.

10. Vorrichtung nach einem beliebigen der vorhergehenden Ansprüche, dadurch gekennzeichnet, daß die Dichtung (20, 26) eine Ringdichtung ist.

**Claims**

1. A gas supply device for cooker burners, comprising, in association with each burner, a tap for shutting off and adjusting the gas flow, the tap including a gas outlet orifice, an injector (8) including a gas inlet orifice and a tube (10) for connecting these two orifices, said orifices having mutually parallel axes and opening towards the same direction, the two ends (11, 12) of the tube (10) also having mutually parallel axes and opening in the same direction, and the distance between the axes of the orifices being equal to the distance between the axes of the ends (11, 12) of the tube, characterized in that the shape of the orifices is complementary to that of the ends, such that the connection between the ends of the tube and said orifices is performed by merely inserting two of these elements into the two others, and that said shape allows at least one seal (20, 26) to be placed and maintained between each end of the tube and the corresponding orifice, and that securing means (17, 22) are provided at each end of the tube for holding it and for preventing it from being withdrawn.

2. A device according to claim 1, characterized in that the ends (11, 12) of the tube (10) have a circular cross-section as well as the orifices of the tap (6) and of the injector (8), and that the outer diameter of said ends is smaller than the inner diameter of the orifices such that said ends (11, 12) of the tube may be inserted into said orifices.

3. A device according to claim 2, characterized in that the securing means (17, 23) for holding the tube (10) on the tap (6) and on the injector (8) are constituted by rings each having a resilient portion comprising at least one detail (21, 24) intended to cooperate by a snap-in coupling with a detail of complementary shape (89, 60) of the structure surrounding each orifice.

4. A device according to claim 3, characterized in that means (19, 23) are provided for securing the rings (17, 22) on the tube (10).

5. A device according to claim 4, characterized in that the means for securing the rings (17, 22) are constituted by narrowings (19, 23) provided on the rings, and by collars (18, 25) provided on the tube (10) close to each one of its ends (11, 12) said collars acting as stops for these narrowings.

6. A device according to claim 5, characterized in that at least one seal (20, 26) is interposed between each collar (18, 25) and the corresponding end (11, 12) of the tube (10).

7. A device according to claim 6, characterized in that the inner diameter (d) at the inlet of the orifices of the taps (6) or the injectors (8) exceeds the outer diameter of the collars (18, 25) and is slightly smaller than the outer diameter of the seals (20, 26), when the seals are positioned between the collars and the ends of the tube in order to allow the seals and the collars to be inserted into the inlets of said orifice and to be compressed between the inner walls of the inlets and the outer walls of the ends of the tube, in order to provide for tightness.

8. A device according to claim 7, characterized in that at a distance from the inlet of the orifices greater than the thickness of the seals taken between the collars and the ends of the tube, the orifices become suddenly smaller, and that their inner diameter (d) becomes slightly larger than the outer diameter of the portions of the tube comprised between the ends (11, 12) and the seals (20, 26), such that only these portions can be inserted therein.

9. A device according to claim 8, characterized in that each seal (20, 26) is compressed between a collar (18, 25) and the sudden diameter reduction of the corresponding orifice of the tap (6) or the injector (8) when the tube (10) is positioned and when the detail (21, 24) of the resilient portion of the rings (17, 22) is snapped onto the detail of complementary shape (89, 60) of the structure surrounding the corresponding orifice.

10. A device according to any one of the preceding claims, characterized in that the seal (20, 26) is a torus seal.

FIG_1

FIG_2

# FIG_3

# FIG_4

# FIG_5